# EUROPÄISCHE PATENTSCHRIFT

(11) **EP 2 431 222 B1**
(45) Veröffentlichungstag und Bekanntmachung des Hinweises auf die Patenterteilung: **18.03.2015**
(21) Anmeldenummer: 11181748.2
(22) Anmeldetag: 19.09.2011
(51) Int. Cl.: B60P 1/64

(54) **Nutzfahrzeug zum Transport von Containern**
Commercial vehicle for transporting containers
Véhicule utilitaire pour le transport de conteneurs

(30) Priorität: 20.09.2010 DE 102010046084
(43) Veröffentlichungstag der Anmeldung: 21.03.2012
(73) Patentinhaber: Kögel Trailer GmbH & Co. KG, 89349 Burtenbach (DE)
(72) Erfinder: Eschey, Thomas, 86500 Kutzenhausen (DE)
(74) Vertreter: Kilchert, Jochen

(56) Entgegenhaltungen:
- EP-A1- 1 564 117
- EP-A2- 2 165 918
- WO-A1-96/25302
- DE-U1- 9 306 626
- FR-A1- 2 880 861

## Beschreibung

Die Erfindung betrifft ein Nutzfahrzeug zum Transport von Containern gemäß dem Oberbegriff des Patentanspruchs 1. Ein derartiges Nutzfahrzeug ist beispielsweise aus EP 1 486 375 A2 bekannt.

EP 1 486 375 A2 offenbart ein Containerchassis mit einem Fahrgestellrahmen und einem Laderahmen, wobei der Laderahmen gegenüber dem Fahrgestellrahmen verschiebbar ist. Somit ist die Länge des Containerchassis variabel. Die Längenveränderbarkeit bzw. Teleskopierbarkeit des bekannten Nutzfahrzeugs ermöglicht den Transport von Containern mit unterschiedlichen Containerlängen. Der Aufbau bzw. die Funktionsweise des Verschiebemechanismus ist nicht beschrieben.

Aus EP 0 825 097 A1 ist ferner einen Flachbettauflieger bekannt, der für unterschiedliche Beladungszustände ausziehbar bzw. teleskopierbar ist. Flachbettauflieger dienen zum Transport von palettierter Ladung, Beton- oder Stahlträgern sowie Holzbalken. Notwendigerweise soll der Flachbettauflieger, im Unterschied zu einem Containerauflieger bzw. -chassis, zur Aufnahme der Ladung sowohl im eingefahrenen, aus auch im ausgefahrenen Zustand einen möglichst ebenen und durchgängigen Ladeboden aufweisen.
DE 9306626 U und EP 1564117 offenbaren weitere Containertransporter.

Das bekannte Nutzfahrzeug weist dazu eine Rahmenkonstruktion auf, die einen vorderen Rahmen und einen hinteren Rahmen umfasst. Der hintere Rahmen ist mit den Achsen des Nutzfahrzeugs fest verbunden bzw. trägt das Fahrgestell des Nutzfahrzeugs. Der vordere Rahmen umfasst eine Kupplung zur Verbindung des Nutzfahrzeugs mit einer Zugmaschine.

Der vordere Rahmen und der hintere Rahmen weisen jeweils Längsträger auf, wobei die Längsträger des vorderen Rahmens zumindest abschnittsweise in die Längsträger des hinteren Rahmens eingreifen. In einem in Fahrtrichtung hinteren Bereich des vorderen Rahmens sind mit den Längsträgern des vorderen Rahmens Rollen vorgesehen, auf denen der hintere Rahmen aufliegt. Die Längsträger des hinteren Rahmens sind jeweils im Wesentlichen als C-Profil ausgebildet und tragen einen Ladeboden, der sich in Fahrtrichtung nach vorne über die Längsträger hinaus erstreckt, so dass der Ladeboden des hinteren Rahmens zumindest den hinteren Abschnitt des vorderen Rahmens überdeckt. In dem sich über die Längsträger des hinteren Rahmens hinaus erstreckenden Abschnitt des Ladebodens des hinteren Rahmens sind weitere Rollen angeordnet, die auf dem vorderen Rahmen aufliegen. Insgesamt weist das bekannte Nutzfahrzeug also mehrere Rollen zwischen dem vorderen Rahmen und dem hinteren Rahmen auf, so dass der vordere Rahmen gegenüber dem hinteren Rahmen rollengelagert verschiebbar ist. Auf diese Weise kann der bekannte Flachbettauflieger unterschiedliche Längen einnehmen und somit an unterschiedliche Ladungen angepasst werden.

Bei Nutzfahrzeugen zum Transport von Containern stellt sich das Problem, dass die Abmessungen des beladenen Fahrzeugs die gesetzlich vorgeschriebene Fahrzeughöhe einhalten müssen. Dies ist insbesondere beim Transport sogenannter High-Cube-Container kritisch. Es kommt deshalb darauf an, dass das Fahrgestell derartiger Nutzfahrzeuge niedrig gebaut ist.

Ein weiteres Problem bei Nutzfahrzeugen zum Transport von Containern besteht darin, dass die Längenverstellbarkeit des Fahrzeugrahmens auch unter ungünstigen Bedingungen, beispielsweise bei nasser Straße, losem Untergrund oder bei schräg zum Nutzfahrzeug stehender Zugmaschine gegeben sein muss. Dies stellt bei herkömmlichen gleitgelagerten Rahmenkonstruktionen ein Problem dar, da die Rahmenkonstruktion im beladenen Zustand bei den vorstehend genannten Bedingungen in der Regel nicht teleskopierbar ist.

Die im Zusammenhang mit dem vorstehend genannten Flachbettauflieger gemäß EP 0 825 097 A1 bekannte Rollenlagerung ist für den Einsatz zum Containertransport ungeeignet, da diese Lagerung platzaufwendig ist und die zur Verfügung stehende Transporthöhe einschränkt. Außerdem ist die bekannte Lagerung für die beim Transport, insbesondere beim Beladen von Containern auftretenden Belastungen nicht ausgelegt.

Der Erfindung liegt die Aufgabe zugrunde, ein Nutzfahrzeug der eingangs genannten Art im Hinblick auf eine sichere Längenverstellbarkeit der Rahmenkonstruktion zu verbessern.

Erfindungsgemäß wird diese Aufgabe durch ein Nutzfahrzeug mit den Merkmalen des Anspruchs 1.

Die Erfindung beruht auf dem Gedanken, ein Nutzfahrzeug zum Transport von Containern mit einer längenverstellbaren Rahmenkonstruktion anzugeben, die einen Fahrgestellrahmen und einen Laderahmen jeweils mit zwei durch Querträger verbundenen Längsträgern aufweist. Der Fahrgestellrahmen und/oder der Laderahmen weist Rollen auf derart, dass der Fahrgestellrahmen und der Laderahmen entlang der Längsträger relativ zueinander verschiebbar sind. Die Rollen des Fahrgestellrahmens sind an wenigstens einem Querträger zwischen den Längsträgern des Fahrgestellrahmens befestigt. Zusätzlich oder alternativ sind die Rollen des Laderahmens seitlich an Außenflächen des Längsträgers des Laderahmens befestigt.

Der Laderahmen ist also auf dem Fahrgestellrahmen durch Rollen gelagert, die sich zwischen den beiden Rahmenteilen befinden. Dabei liegt der Laderahmen auf den Rollen des Fahrgestellrahmens auf und/oder die Rollen des Laderahmens liegen auf dem Fahrgestellrahmen auf.

Die Erfindung hat den Vorteil, dass die Anordnung der Rollen am Querträger des Fahrgestellrahmens und/oder durch die Anordnung der Rollen des Laderahmens seitlich an den Außenflächen der Längsträger des Laderahmens es ermöglicht, die Rollen des Fahrgestellrahmens und des Laderahmens seitlich voneinander beabstandet bzw. seitlich nebeneinander anzuordnen, so dass diese nicht, wie im Stand der Technik übereinander angeordnet werden müssen. Dadurch wird der Platzbedarf der Rollenlagerung in vertikaler Richtung beträchtlich verringert, so dass eine vergleichsweise große Transporthöhe zur Verfügung steht. Dieser Vorteil wird jeweils für sich genommen durch die vorstehend beschriebene Anordnung der Rollen am Fahrgestellrahmen bzw. der Rollen am Laderahmen erreicht. Durch die Befestigung der Rollen des Fahrgestellrahmens am Querträger steht nämlich ausreichend Platz zur Verfügung, um die Rollen nach Bedarf jeweils weiter nach innen zu rücken. Dasselbe gilt umgekehrt für Rollen des Laderahmens, die seitlich an den Außenflächen der Längsträger des Laderahmens befestigt sind und somit nach Bedarf weiter außen angeordnet werden können. Der vorstehend genannte Vorteil des verringerten Platzbedarfs ergibt sich in besonderer Weise in der Kombination der beiden Merkmale, wobei die Rolle des Fahrgestellrahmens an wenigstens einem Querträger zwischen den Längsträgern des Fahrgestellrahmens und die Rollen des Laderahmens seitlich an Außenflächen der Längsträger des Laderahmens befestigt sind.

Die Befestigung der Rollen des Fahrgestellrahmens am Querträger hat überdies den Vorteil, dass die Rollenlagerung besonders robust ist und damit für die Aufnahme der beim Be- oder Entladen der Container auftretenden hohen Belastungen besonders geeignet ist.

Bei der bevorzugten Ausführungsform der Erfindung sind die Rollen des Fahrgestellrahmens in einer Aussparung im Querträger angeordnet, wobei ein Abschnitt der Rollen über die Oberkante der Aussparung vorsteht. Dadurch wird die kompakte Bauweise der Rollenlagerung verbessert und die zur Verfügung stehende Transporthöhe erhöht. Außerdem wird durch die Anordnung der Rollen des Fahrgestellrahmens in der Aussparung erreicht, dass relativ große und/oder mehrere Rollen pro Aussparung eingesetzt werden können, wodurch eine verbesserte Lastaufnahme und größere Sicherheit erzielt wird.

Der Fahrgestellrahmen kann mit einem Achsaggregat verbunden sein, das eine in Fahrtrichtung erste Radachse aufweist, wobei die Rollen des Fahrgestellrahmens in Fahrtrichtung einerseits vor und andererseits hinter der ersten Radachse angeordnet sind. Dies bedeutet, dass pro Längsträger des Fahrgestellrahmens mehrere in Längsrichtung, d.h. entlang des Längsträgers beabstandet angeordnete Rollen vorgesehen sind, die auf beiden Seiten der ersten Radachse des Achsaggregats angeordnet sind. Dadurch wird erreicht, dass der Fahrgestellrahmen und der Laderahmen an wenigstens zwei Stellen rollengelagert sind, wobei die Rollenlagerungen am Fahrgestellrahmen vorgesehen sind. Weitere Rollenlagerungen, beispielsweise eine am Laderahmen angebrachte Rollenlagerung zusätzlich zu den Rollen des Fahrgestellrahmens sind möglich. Durch die Mehrfachlagerung des Laderahmens auf dem Fahrgestellrahmen wird die Belastung der einzelnen Rollen verringert. Außerdem wird die Leichtgängigkeit der längenverstellbaren Rahmenkonstruktion verbessert.

Vorzugsweise weisen wenigstens zwei Querträger des Fahrgestellrahmens jeweils Rollen, insbesondere Rollenpakete 19, auf, wobei der in Fahrtrichtung hintere Querträger zwischen der ersten Radachse und einer zweiten Radachse des Achsaggregats angeordnet ist. Dadurch wird auf einfache Weise die Anordnung der Rollen, insbesondere der Rollenpakete 19, auf beiden Seiten der ersten Radachse erreicht, wobei die Anordnung der Rollen, insbesondere der Rollenpakete 19, auf den beiden Querträgern zur einer besonders robusten Lagerung des Laderahmens auf dem Fahrgestellrahmen führt.

Der seitliche Abstand quer zur Fahrtrichtung zwischen den Rollen, insbesondere den Rollenpaketen, eines Querträgers, d.h. der seitliche Abstand der Rollen, insbesondere den Rollenpaketen, des Fahrgestellrahmens entspricht dem Abstand der Längsträger des Laderahmens. Dadurch wird erreicht, dass der Laderahmen, insbesondere die Längsträger des Laderahmens direkt auf den Rollen des Fahrgestellrahmens angeordnet sind und dort abrollen.

Bei einer besonders bevorzugten Ausführungsform weist der Fahrgestellrahmen Rollenanordnungen zur seitlichen Führung des Laderahmens auf. Damit wird ein Verkanten des Laderahmens mit dem Fahrgestellrahmen vermieden, insbesondere unter schwierigen Verstellbedingungen, beispielsweise wenn die Zugmaschine schräg zur Längsachse des Nutzfahrzeugs steht.

Die Rollenanordnung zur seitlichen Führung des Laderahmens kann Rollen umfassen, die mit den Längsträgern des Fahrgestellrahmens verbunden sind und seitlich an Außenflächen des Längsträgers des Laderahmens anliegen. Diese Ausführung der Rollenanordnung ist besonders einfach und bewirkt zuverlässig die gewünschte seitliche Führung des Laderahmens.

Die Rollenanordnung kann in die Längsträger des Laderahmens seitlich eingreifen und den Laderahmen in vertikaler Richtung sichern. Die zusätzliche Sicherungsfunktion der Rollenanordnung verhindert, dass der Laderahmen aus dem Fahrgestellrahmen beispielsweise bei unebener Fahrbahn im entladenen Zustand springt. Die Sicherungsfunktion vermeidet auch ein Lösen des Laderahmens vom Fahrgestellrahmen, wenn ein Container nicht ordnungsgemäß, beispielsweise ruckartig von der Rahmenkonstruktion entfernt wird.

Die Rollenanordnung kann horizontale Gleitflächen aufweisen, die parallel zu den Längsträgern des Laderahmens angeordnet sind und jeweils einen Anschlag für die Längsträger des Laderahmens bilden. Dadurch wird auf einfache Weise die Sicherungsfunktion der Rollenanordnung verwirklicht, wobei zusätzlich die Längsverschieblichkeit des Laderahmens bezogen auf den Fahrgestellrahmen erhalten bleibt, selbst wenn die Rollenanordnung am Längsträger des Laderahmens anschlägt, da der Anschlag als horizontale Gleitfläche ausgebildet ist.

Die Rollen des Laderahmens können am heckseitigen Ende des Längsträgers des Laderahmens angeordnet sein, so dass eine maximale Verstelllänge der Rahmenkonstruktion erreicht wird.

Vorzugsweise sind die Auflagebereiche bzw. Aufstandsflächen der Rollen des Fahrgestellrahmens und des Laderahmens in derselben Verschiebeebene angeordnet.

Bei einer weiteren besonders bevorzugten Ausführungsform der Erfindung sind die Rollen in Rollenpakete 19 mit jeweils wenigstens zwei Rollen angeordnet. Das bedeutet, dass jeweils ein Rollenpaket 19 mindestens zwei Rollen aufweist und somit eine Baugruppe bildet. Dies kann sowohl für die Rollen des Fahrgestellrahmens als auch für die Rollen des Laderahmens erfolgen. Die Anordnung der Rollen in Rollenpaketen ermöglicht die Verwendung vergleichsweise kleindimensionierter Rollen, wodurch der Platzbedarf der Lagerung weiter verringert wird. Die Rollenpakete 19 ermöglichen eine besonders robuste Lagerung des Laderahmens.

Die vorstehend genannte Ausführung, bei der die Rollen in Rollenpaketen mit jeweils wenigstens zwei Rollen angeordnet sind, wird einerseits im Zusammenhang mit der Anordnung der Rollen am Querträger des Fahrgestellrahmens bzw. an den seitlichen Außenflächen der Längsträger des Laderahmens offenbart. Andererseits wird die Anordnung der Rollen in Rollenpaketen mit jeweils wenigstens zwei Rollen auch unabhängig davon im Zusammenhang mit der längenverstellbaren Rahmenkonstruktion des Nutzfahrzeuges zum Transport von Containern offenbart und beansprucht.

Die Erfindung wird nachfolgend mit weiteren Einzelheiten anhand der in den beigefügten schematischen Zeichnungen dargestellten Ausführungsbeispielen erläutert. In diesen zeigen:
- Figur 1:: eine Seitenansicht eines Laderahmens nach einem erfindungsgemäßen Ausführungsbeispiel;
- Figur 2:: eine Draufsicht auf den Laderahmen gemäß Figur 1;
- Figur 3:: eine Draufsicht auf einen Fahrgestellrahmen nach einem erfindungsgemäßen Ausführungsbeispiel, der zusammen mit dem Laderahmen gemäß Figur 1 verwendet werden kann;
- Figur 4:: eine perspektivische Ansicht einer Rollenanordnung zur seitlichen Führung des Laderahmens; und
- Figur 5:: eine Detailansicht der Rollenlagerung des Fahrgestellrahmens.

Das in den Zeichnungen dargestellte Nutzfahrzeug ist ein mehrachsiger Sattelauflieger zum Transport von Containern, auch Containerchassis bzw. Container-Sattelauflieger genannt. Alternativ kann das Nutzfahrzeug auch einen Anhänger bilden. Im Unterschied zu einem Container-Sattelauflieger, der in einem vorderen Abschnitt des Oberrahmens einen Königszapfen 30 zur Verbindung einer Sattelkupplung eines Zugfahrzeugs aufweist, umfasst ein Containeranhänger eine Deichsel, die mit einer Anhängerkupplung eines Zugfahrzeugs verbindbar ist.

Das Nutzfahrzeug ist zum Transport von ISO-Containern, beispielsweise von 20' bzw. 30'-Cotainern geeignet. Mit dem Nutzfahrzeug können auch sogenannte High-Cube-Container, insbesondere 40'-High-Cube-Container transportiert werden. Zum Transport der unterschiedlich langen Container ist die Rahmenkonstruktion 10 des Nutzfahrzeugs längenverstellbar. Die Verschieblichkeit der Rahmenkonstruktion wird auch dazu genutzt, um kürzere 20'-Container zum Be- und Entladen heckbündig zu verschieben, so dass diese an einer Rampe zugänglich sind. Um für den Transport einen ausreichend hohen Satteldruck zu erzeugen, wird der 20'-Container in Fahrtrichtung nach vorne verschoben.

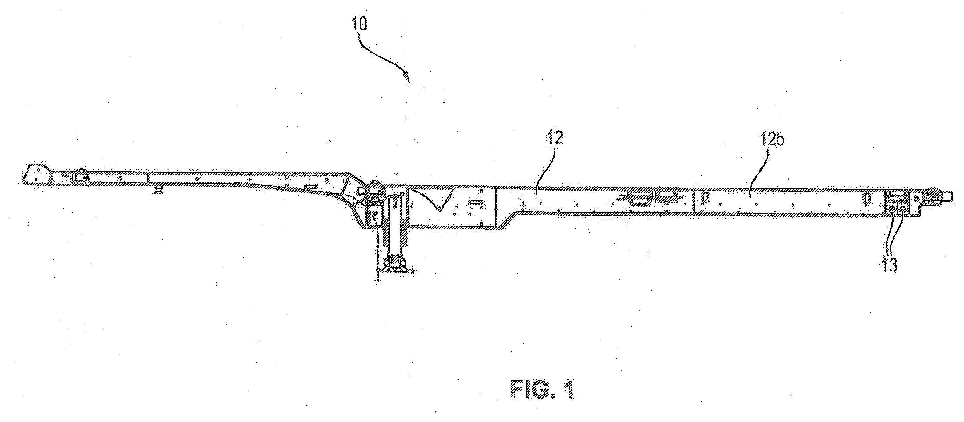

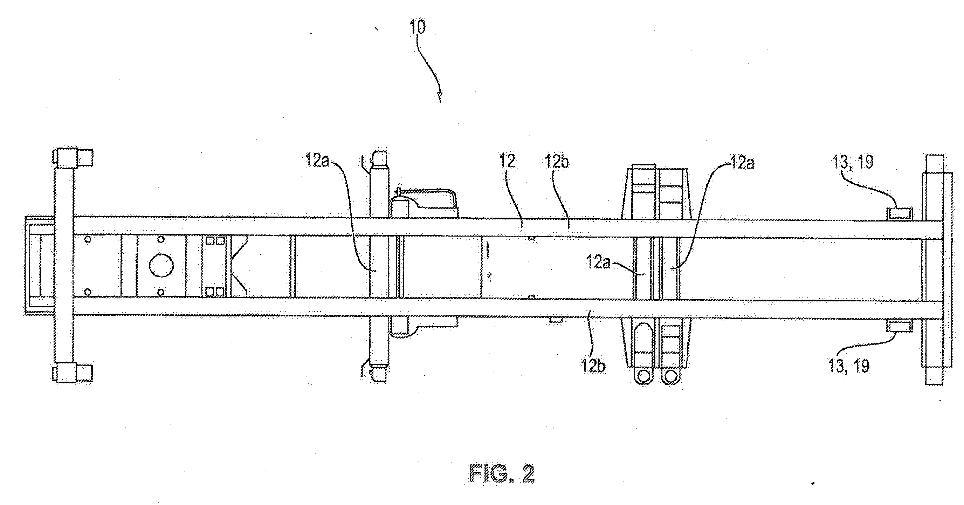

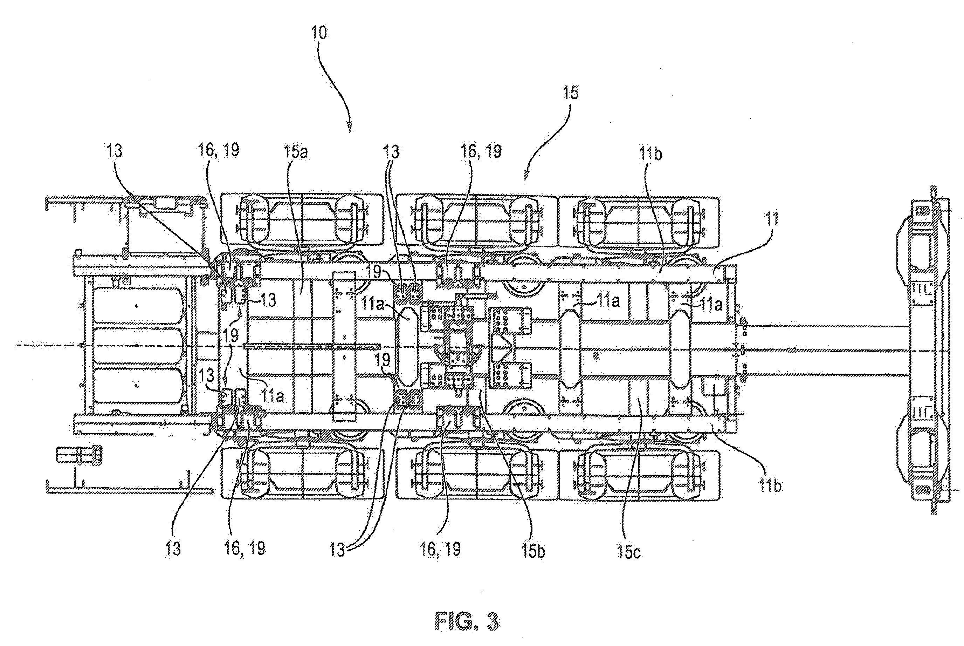

Die Längenverstellbarkeit der Rahmenkonstruktion wird bei dem Ausführungsbeispiel dadurch erreicht, dass ein Ladeoberrahmen 12 relativ verschieblich zu einem Fahrgestellrahmen 11 angeordnet ist. Zusammen bilden der Laderahmen 12 und der Fahrgestellrahmen 11 die Rahmenkonstruktion 10. Der Laderahmen 12 und der Fahrgestellrahmen 11 sind jeweils getrennt in den Figuren 1, 2 bzw. in Figur 3 dargestellt. Im Gebrauch sind die beiden Rahmen 11, 12 aufeinander montiert, wobei der Laderahmen 12 oben auf dem Fahrgestellrahmen 11 angeordnet ist. Der Laderahmen 12 ist schmäler als der Fahrgestellrahmen 11. Bei der Rahmenkonstruktion handelt es sich um einen an sich bekannten bzw. üblichen Leiterrahmen. Dazu weist der Laderahmen 12 zwei Längsträger 12b auf, die parallel voneinander beabstandet und durch Querträger 12a miteinander verbunden sind. Der Laderahmen 12 weist ferner eine Kupplungsplatte mit Königszapfen sowie mehrere seitlich über die Längsträger 12b vorstehende Verriegelungselemente, beispielsweise sogenannte Twistlocks auf, die zur Arretierung der zu transportierenden Container vorgesehen sind. Diese Baumerkmale des Laderahmens 12 sind an sich bekannt und werden nicht näher beschrieben.

Der Laderahmen 12 weist Rollen 13 auf, die an beiden Längsträgern 12b befestigt sind. Konkret sind die Rollen 13 seitlich an den Außenflächen der Längsträger 12b des Laderahmens 12 befestigt. Die Längsträger 12b sind als I-Profile ausgebildet. Andere Profilarten sind möglich. Die Aufnahme der Rollen 13 ist an den jeweiligen Außenseiten der Stege der I-Profile befestigt. Die Rollen 13 der beiden Längsträger 12b sind auf derselben Höhe angeordnet. Die Drehachsen der Rollen 13 verlaufen senkrecht zur Längsachse der jeweiligen Längsträger 12b, so dass die Rollen 13 ein Abrollen in Fahrtrichtung bzw. eine Verschiebung des Laderahmens 12 in bzw. entgegen Fahrtrichtung ermöglichen. Die Rollen 13 des Laderahmens 12 weisen also im montierten Zustand nach unten, so dass diese auf dem Fahrgestellrahmen 11 aufliegen können.

Die Rollen 13 sind in einer Rollenaufnahme gelagert, die mit der Außenfläche bzw. mit dem Steg der I-Profile der Längsträger 12b verbunden ist, beispielsweise verschraubt ist. Es ist möglich, pro Außenfläche der Längsträger 12b eine einzige Rolle zu verwenden. Vorzugsweise sind Rollenpakete 19 mit mehreren Rollen 13 vorgesehen, insbesondere mit wenigstens zwei bzw. genau zwei Rollen 13. Im Ausführungsbeispiel gemäß Figur 1 sind pro Längsträger 12b ein Rollenpaket 19 mit jeweils zwei Rollen 13 vorgesehen. Der Laderahmen 12 weist also vier Einzelrollen auf, die in zwei Rollenpaketen an den beiden Längsträgern 12b untergebracht sind. Es ist auch möglich, mehrere Rollenpakete 19 und/oder mehrere Einzelrollen pro Längsträger 12b des Laderahmens 12 vorzusehen. Beispielsweise können an der Außenfläche des jeweiligen Längsträgers 12b zwei in Längsrichtung des Längsträgers 12b beabstandet angeordnete Rollenpakete 19 oder mehr als zwei Rollenpakete 19 mit jeweils mehreren Rollen angeordnet sein.

Die Rollen 13 der Rollenpakete 19 sind federgelagert.

Die Anordnung der Rollen 13 am heckseitigen Ende des Laderahmens 12 kann beispielsweise dadurch erfolgen, dass die Rollen 13 zwischen dem Querträger 12a, der das Heck abschließt und dem in Fahrtrichtung nächsten Querträger 12a angeordnet sind. Konkret sind die Rollen 13 näher am Querträger 12a, der das Heck des Laderahmens abschließt angeordnet als am in Fahrtrichtung nächsten Querträger 12a.

Der Fahrgestellrahmen 11 gemäß Figur 3 umfasst zwei Längsträger 11b, die durch Querträger 11a miteinander verbunden sind. Die Längsträger 11b erstrecken sich im Wesentlichen in Fahrtrichtung bzw. Längsrichtung des Nutzfahrzeugs. Die Längsträger 11b des Fahrgestellrahmens 11 sind mit einem Achsaggregat 15, das mehrere Radsätze und eine Fahrgestellfederung, insbesondere eine Luftfederung, umfasst. Das Achsaggregat weist in Fahrtrichtung eine vordere erste Radachse 15a, eine mittlere zweite Radachse 15b sowie eine hintere dritte Radachse 15c auf. In einem vorderen Bereich des Fahrgestellrahmens 11, insbesondere in Fahrtrichtung vor der ersten Radachse 15a und zwischen der ersten Radachse 15a und der zweiten Radachse 15b, ist jeweils ein Querträger 11a des Fahrgestellrahmens 11 angeordnet, der Rollen 13 trägt. Die Rollen 13 sind derart ausgerichtet, dass sich die Abrollrichtung in Längsrichtung des Nutzfahrzeugs bzw. des Fahrgestellrahmens 11 erstreckt. Mit anderen Worten weisen die Rollen 13 jeweils eine Drehachse auf, die sich quer zur Fahrtrichtung bzw. senkrecht zu den Längsträgern 11b des Fahrgestellrahmens 11 erstreckt. Vorzugsweise sind jedem Rollen 13 tragenden Querträger 11a des Fahrgestellrahmens 11 jeweils vier Rollen 13 zugeordnet. Jeweils zwei Rollen 13 bilden ein Rollenpaar bzw. ein Rollenpaket 19. Es ist möglich, dass ein Rollenpaket 19 mehr als zwei Rollen 13 umfasst. Es ist auch möglich anstelle der Rollenpakete 19 Einzelrollen vorzusehen bzw. Rollenpakete 19 und Einzelrollen zu kombinieren. Die Rollen 13 sind Stahlrollen oder entsprechende Rollen.

Sowohl der in Fahrtrichtung vor der ersten Radachse 15a angeordnete Querträger 11a, als auch der vor zweiten Radachse 15b angeordnete Querträger 11a des Fahrgestellrahmens umfasst jeweils zwei Rollenpakete 19, die in der Nähe der Längsträger 11b des Fahrgestellrahmens 11 angeordnet sind. Die Querträger 11a umfassen also jeweils ein rechtes Rollenpaket 19 sowie ein linkes Rollenpaket 19, wobei sich die Richtungsangaben "links" und "rechts" auf die Fahrtrichtung des Nutzfahrzeugs beziehen.

Im montierten Zustand liegt der Laderahmen 12 auf dem Fahrgestellrahmen 11 auf. Der Fahrgestellrahmen 11 und der Laderahmen 12 bilden im montierten Zustand die längenverstellbare Rahmenkonstruktion 10 des Nutzfahrzeugs. Die Längsträger 12b des Laderahmens 12 sind dabei zwischen den Längsträgern 11b des Fahrgestellrahmens 11 angeordnet. Konkret weisen die Längsträger 12b des Laderahmens 12 zueinander einen Abstand auf, der kleiner als der Abstand zwischen den Längsträgern 11b des Fahrgestellrahmens 11 ist. Der Abstand der Längsträger 12b des Laderahmens 12 entspricht im Wesentlichen dem Abstand der Rollenpakete 19, die an den Querträgern 11a des Fahrgestellrahmens 11 angeordnet sind. Somit bilden die unteren Auflageflächen der Längsträger 12b des Laderahmens 12 eine Abrollfläche für die Rollen 13 des Fahrgestellrahmens 11. Die außen an den Längsträgern 12b des Laderahmens 12 angeordneten Rollen 13 liegen hingegen im montierten Zustand des Nutzfahrzeugs bzw. der Rahmenkonstruktion 10 auf den Längsträgern 11b des Fahrgestellrahmens 11 auf. Die Längsträger 11b des Fahrgestellrahmens 11 weisen eine obere Fläche auf, die gleichzeitig eine Abrollfläche für die Rollen 13 des Laderahmens 12 bilden.

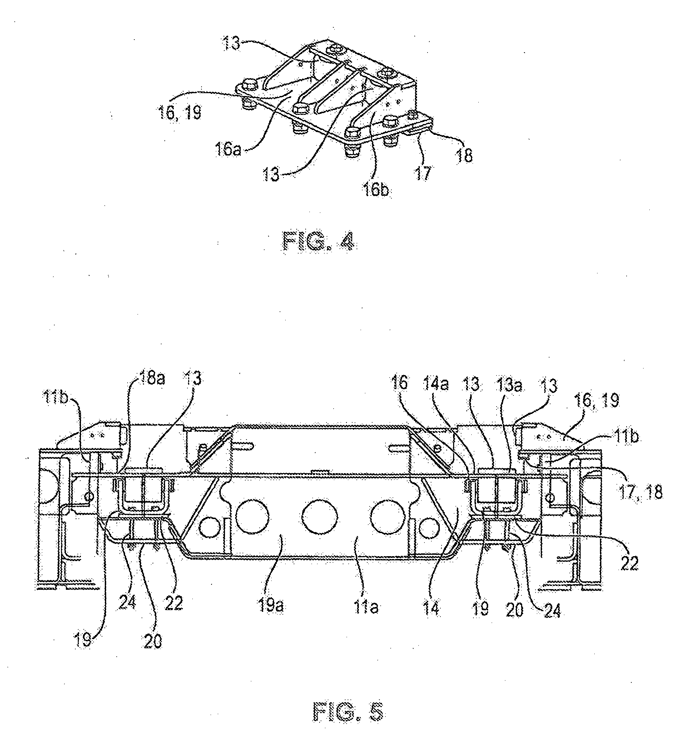

Die Anordnung der Rollen 13 bzw. Rollenpakete 19 im Fahrgestellrahmen 11 ist in Figur 5 deutlich erkennbar. Vorteilhaft ist vorgesehen, dass die Rollen 13 bzw. Rollenpakete 19 in den Querträgern 11a des Fahrgestellrahmens 11 angeordnet sind. Insbesondere sind die Rollen 13 bzw. Rollenpakete 19 in den Querträgern 11a des Fahrgestellrahmens 11 in einer Aussparung 14 zumindest teilweise versenkt angeordnet, so dass die Drehachse 16 der Rolle 13 unterhalb einer oberen Auflageplatte 18 des Querträgers 11a bzw. angeordnet ist. Ein Abschnitt 13a der Rolle 13 steht über die Oberkante 14a der Aussparung vor, wobei der Laderahmen 12 im montierten Zustand auf dem Abschnitt 13a aufliegt.

Im Allgemeinen umfasst der Querträger 11a eine obere Auflageplatte 18a, die im Wesentlichen eine horizontale Ebene bildet. Senkrecht zur Auflageplatte 18a ist eine Stützplatte 19a angeordnet, die sich von der Auflageplatte 18a im Wesentlichen nach unten erstreckt. Die Stützplatte 19a verbindet die Auflageplatte 18a mit einer unteren Befestigungsplatte 20, die sich im Wesentlichen parallel zur Auflageplatte 18a erstreckt. Insgesamt weist der Querträger 11a ein I-Profil auf, wobei der obere Flansch des I-Profils durch die Auflageplatte 18a und der untere Flansch des I-Profils durch die Befestigungsplatte 20 gebildet ist. Die Rollen 13 bzw. die Rollenpakete 19 sind mit der Befestigungsplatte 20 verbunden. Dabei ist der Abstand zwischen der Befestigungsplatte 20 und der Auflageplatte 18a derart eingestellt, dass sich die Rolle 13 abschnittsweise durch die Auflageplatte 18a erstreckt bzw. über den Querträger 11a herausragt. Die Drehachse 16 der Rolle 13 ist unterhalb der Auflageplatte 18 angeordnet.

In diesem Zusammenhang wird darauf hingewiesen, dass die Rahmenkonstruktion 10 einerseits Rollen 13 aufweisen kann, die mit dem Fahrgestellrahmen 11 verbunden sind. Insbesondere kann die längenverstellbare Rahmenkonstruktion ausschließlich Rollen 13 am Fahrgestellrahmen 11 aufweisen. Es ist auch möglich, dass ausschließlich der Laderahmen 12 Rollen 13 aufweist. Generell sind die Rollen 13 bzw. Rollenpakete 19 in Längsrichtung der Rahmenkonstruktion 10 bzw. entlang der Längsträger der Rahmenkonstruktion 10 verteilt angeordnet. Vorzugsweise sind in Längsrichtung der Rahmenkonstruktion 10 jeweils drei Rollenpakete 19 pro Rahmenseite also drei linke Rollenpakete 19 und drei rechte Rollenpakete 19, vorgesehen. Die Rollenpakete 19 können dabei ausschließlich am Fahrgestellrahmen 11 oder ausschließlich am Laderahmen 12 angeordnet sein. Vorzugsweise sind ein Teil der Rollenpakete 19 am Fahrgestellrahmen 11 und ein weiterer Teil der Rollenpakete 19 am Laderahmen 12 angeordnet, wie in Figuren 1 und 2 dargestellt. Konkret weist der Fahrgestellrahmen 11 vier Rollenpakete 19 und der Laderahmen 12 zwei Rollenpakete 19 auf.

Es ist möglich, mehr als zwei Querträger 11a des Fahrgestellrahmens 11 mit Rollen 13 zu versehen. Beispielsweise können drei Querträger mit Rollen ausgerüstet sein, so dass der Fahrgestellrahmen sechs Rollenpakete 19 umfasst. Entsprechendes gilt für den Laderahmen 12. Die Ausführung der Rollenlagerung am dritten bzw. an einem weiteren Querträger 11a entspricht der Rollenlagerung an den vorderen Querträgern 11a.

In den Figuren 3 bis 5 ist dargestellt, dass der Fahrgestellrahmen 11 eine Rollenanordnung 16 zur seitlichen Führung des Laderahmens 12 aufweist. Der Fahrgestellrahmen 11 umfasst somit einerseits die vorstehend beschriebenen Rollen 13 zur horizontalen Lagerung des Laderahmens 12 und andererseits Rollenanordnungen 16 bzw. mehrere Rollenpakete 19 zur seitlichen Führung des Laderahmens 12.

Die Rollenanordnungen 16 zur seitlichen Führung des Laderahmens 12 weisen jeweils Rollen 13 auf, die mit den Längsträgern 11b des Fahrgestellrahmens 11 verbunden sind und seitlich an Außenflächen der Längsträger 12b des Laderahmens anliegen. Ein Beispiel für eine derartige Rollenanordnung 16 ist in Figur 4 dargestellt. Wie auch in Figur 5 zu erkennen, verlaufen die Drehachsen der Rollen 13 der Rollenanordnung 16 in vertikaler Richtung, so dass die im montierten Zustand am Laderahmen 12 anliegenden Rollen 13 der Seitenführung eine Verschiebung des Laderahmens 12 in bzw. entgegen Fahrtrichtung ermöglichen. Konkret weist die Rollenanordnung 16 eine Befestigungsplatte 16a auf, die im montierten Zustand jeweils mit dem Längsträger 11b des Fahrgestellrahmens 11 verschraubt bzw. anderweitig verbunden ist. Wie in Figur 5 gut zu erkennen, stehen die Rollen 13 der Rollenanordnung 16 über die Befestigungsplatte 16a vor, so dass diese an der Außenfläche der Längsträger 12b des Laderahmens anliegen können. Zur Erhöhung der Stabilität sind mehrere Versteifungsrippen 16b vorgesehen, zwischen denen jeweils die Rollen 13 der Rollenanordnung 16 angeordnet bzw. gelagert sind.

Es hat sich als zweckmäßig erwiesen, pro Längsträger 11b des Fahrgestellrahmens 11 zwei Rollenanordnungen 16 anzuordnen, die in Längsrichtung des Längsträgers 11b voneinander beabstandet sind. Dabei ist die erste Rollenanordnung 16 in Fahrtrichtung vor der ersten Radachse 15a und die zweite Rollenanordnung 16 etwa in Höhe der zweiten Radachse 15b angeordnet. In Figur 4 ist ferner zu erkennen, dass an der Befestigungsplatte 16a, konkret an der Unterseite der Befestigungsplatte 16a eine horizontale Gleitfläche 17 vorgesehen ist. Im montierten Zustand dient die horizontale Gleitfläche 17 als Anschlag 18 für einen Längsträger 12b des Laderahmens 12, um diesen in vertikaler Richtung zu sichern. Dies bedeutet, dass im montierten Zustand die Gleitfläche 17 einen Teil des Längsträgers 12b des Laderahmens 12 übergreift, wobei zwischen der Gleitfläche 17 und dem Längsträger 12b des Laderahmens 12 ein Spalt vorgesehen kann. Alternativ kann auch der Längsträger 12b des Laderahmens 12 im montierten Zustand an der Gleitfläche 17 der Rollenanordnung 16 anliegen.

Der Längsträger 12b des Laderahmens 12 kann beispielsweise als I-Profil oder als Doppel-T-Träger ausgebildet sein, wobei die Gleitfläche 17 den unteren Horizontalflansch des Längsträgers 12b übergreift. Die Rollen 13 der Rollenanordnung 16 liegen am Steg des Längsträgers 12b an und führen diesen in seitliche Richtung. Generell ergibt sich damit eine Anordnung, bei der die Rollenanordnung 16 jeweils in den Längsträger 12b des Laderahmens 12 seitlich eingreift und diesen in vertikaler Richtung sichert.

Wie in Figur 5 zu erkennen, sind die Gleitflächen 17 im montierten Zustand in horizontaler Richtung angeordnet und erstrecken sich parallel zu den Längsträgern 11b des Fahrgestellrahmens 11 und somit auch parallel zu den Längsträgern 12b des Laderahmens 12, die in Figur 5 aus Gründen der

Übersichtlichkeit nicht dargestellt sind. In Figur 5 ist auch die senkrechte Anordnung der Rollen 13 für die Seitenführung (Rollenanordnung 16) und die im Querträger 11a angeordneten Rollen 13 für die horizontale Lagerung des Laderahmens 12 zu erkennen.

Die Rollen 13 für die Seitenführung können Stahlrollen, Kunststoffrollen oder entsprechende Rollen sein.

Die Anordnung der Rollen 13 in Rollenpaketen mit jeweils wenigstens zwei Rollen 13 ist einerseits in Figur 5 mit Blick auf die Rollen 13 für die Horizontalführung und andererseits in Figur 4 mit Blick auf die Seitenführung verdeutlicht. In beiden Fällen sind mehrere Rollen 13, insbesondere zwei Rollen 13 zu einer Baugruppe in der Form eines Rollenpakets zusammengefasst. Das Rollenpaket 19 kann als eine einzige Einheit montiert bzw. ausgetauscht werden.

Anstelle der Mehrfachrollen können für die Seitenführung bzw. die Horizontallagerung des Laderahmens 12 Einzelrollen eingesetzt werden, die entsprechend den Mehrfachrollensystemen gelagert sind.

Mit dem in den Figuren dargestellten Ausführungsbeispiel wird eine sichere Axialverstellung der Rahmenkonstruktion auch im beladenen Zustand unter ungünstigen Bedingungen erreicht. Ein Verkanten des Laderahmens 12 im Fahrgestellrahmen 11 wird durch die Rollenanordnungen 16 zur Seitenführung des Laderahmens 12 vermieden. Die für die Horizontallagerung des Laderahmens 12 verantwortlichen Rollen 13 in den Querträgern 11a des Fahrgestellrahmens 11 sowie die am Laderahmen heckseitig angeordneten Rollen 13 ermöglichen einen leichtgängigen Verschiebevorgang, so dass der Laderahmen 12 relativ zum festgebremsten Fahrgestellrahmen 11 auch bei nasser Straße bzw. bei losem Untergrund im beladenen Zustand sicher bewegt werden kann. Die dargestellte Anordnung der Rollen 13 ist ausreichend robust, um die beim Be- oder Entladen auftretenden hohen Belastungen des Chassis sicher aufzunehmen.

Der Vorteil der Anordnung der Rollen 13 in Rollenpaketen besteht zum einen darin, dass die Verwendung von Rollenpaketen besonders wartungsfreundlich ist, da diese bei Bedarf relativ einfach ausgetauscht werden können, ohne dass der Ausbau der einzelnen Rollen erforderlich ist. Außerdem wird die Belastung der einzelnen Rollen verringert, da sich die Last auf mehrere Rollen verteilt. Dies gilt sowohl für die am Fahrgestellrahmen 11 als auch für die am Laderahmen 12 befestigten Rollen 13.

### Bezugszeichenliste

- 10: Rahmenkonstruktion
- 11: Fahrgestellrahmen
- 11a: Querträger des Fahrgestellrahmens 11
- 11b: Längsträger des Fahrgestellrahmens 11
- 12: Laderahmen
- 12a: Querträger des Laderahmens 12
- 12b: Längsträger des Laderahmens 12
- 13: Rolle
- 13a: Rollenabschnitt
- 14: Aussparung
- 14a: Oberkante
- 15: Achsaggregat
- 15a: erste Radachse
- 15b: zweite Radachse
- 15c: dritte Radachse
- 16: Rollenanordnung
- 16a: Befestigungsplatte
- 16b: Versteifungsrippe
- 17: Gleitfläche
- 18: Anschlag
- 19: Rollenpaket
- 18a: Auflageplatte
- 19a: Stützplatte
- 20: Befestigungsplatte

## Patentansprüche

1. Nutzfahrzeug zum Transport von Containern mit einer längenverstellbaren Rahmenkonstruktion (10), die einen Fahrgestellrahmen (11) und einen Laderahmen (12) jeweils mit zwei durch Querträger (11a, 12a) verbundenen Längsträgern (11b, 12b) aufweist
**dadurch gekennzeichnet, dass**
der Fahrgestellrahmen (11) und/oder der Laderahmen (12) Rollen (13) aufweisen derart, dass der Fahrgestellrahmen (11) und der Laderahmen (12) entlang der Längsträger (11b, 12b) relativ zueinander verschiebbar sind, wobei die Rollen (13) des Fahrgestellrahmens (11) an wenigstens einem Querträger (11a) zwischen den Längsträgern (11b) des Fahrgestellrahmens (11) befestigt sind.

2. Nutzfahrzeug nach Anspruch 1,
**dadurch gekennzeichnet, dass**
die Rollen (13) des Fahrgestellrahmens (11) in einer Aussparung (14) im Querträger (11a) angeordnet sind, wobei ein Abschnitt (13a) der Rollen (13) über die Oberkante (14a) der Aussparung (14) vorsteht.

3. Nutzfahrzeug nach Anspruch 1 oder 2,
**dadurch gekennzeichnet, dass**
der Fahrgestellrahmen (11) mit einem Achsaggregat (15) verbunden ist, das eine in Fahrtrichtung erste Radachse (15a) aufweist, wobei die Rollen (13) des Fahrgestellrahmens (11) in Fahrtrichtung einerseits vor und andererseits hinter der ersten Radachse (15a) angeordnet sind.

4. Nutzfahrzeug nach Anspruch 3,
**dadurch gekennzeichnet, dass**
wenigstens zwei Querträger (11a) des Fahrgestellrahmens (11) jeweils Rollen (13) aufweisen, wobei der in Fahrtrichtung hintere Querträger (11a) zwischen der ersten Radachse (15a) und einer zweiten Radachse (15b) des Achsaggregats (15) angeordnet ist.

5. Nutzfahrzeug nach wenigstens einem der Ansprüche 1 bis 4,
**dadurch gekennzeichnet, dass**
der seitliche Abstand quer zur Fahrtrichtung zwischen den Rollen (13) eines Querträgers (11a) dem Abstand der Längsträger (12b) des Laderahmens (12) entspricht.

6. Nutzfahrzeug nach wenigstens einem der Ansprüche 1 bis 5,
**dadurch gekennzeichnet, dass**
der Fahrgestellrahmen (11) Rollenanordnungen (16) zur seitlichen Führung des Laderahmens (12) aufweist.

7. Nutzfahrzeug nach Anspruch 6,
**dadurch gekennzeichnet, dass**
die Rollenanordnung (16) zur seitlichen Führung des Laderahmens (12) Rollen (13) umfasst, die mit den Längsträgern (11b) des Fahrgestellrahmens (11) verbunden sind und seitlich an Außenflächen der Längsträger (12b) des Laderahmens (12) anliegen.

8. Nutzfahrzeug nach Anspruch 6 oder 7,
**dadurch gekennzeichnet, dass**
die Rollenanordnung (16) in die Längsträger (12b) des Laderahmens (12) seitlich eingreift und den Laderahmen (12) in vertikaler Richtung sichert.

9. Nutzfahrzeug nach Anspruch 8,
**dadurch gekennzeichnet, dass**
die Rollenanordnung (16) horizontale Gleitflächen (17) aufweist, die parallel zu den Längsträgern (12b) des Laderahmens (12) angeordnet sind und jeweils einen Anschlag (18) für die Längsträger (12b) des Laderahmens (12) bilden.

10. Nutzfahrzeug nach wenigstens einem der Ansprüche 1 bis 9,
**dadurch gekennzeichnet, dass**
die Rollen (13) des Laderahmens (12) am heckseitigen Ende der Längsträger (12b) des Laderahmens (12) angeordnet sind.

11. Nutzfahrzeug nach wenigstens einem der Ansprüche 1 bis 10,
**dadurch gekennzeichnet, dass**
der Auflagebereich der Rollen (13) des Laderahmens (12) und der Rollen (13) des Fahrgestellrahmens (11) in der selben Verschiebeebene angeordnet ist.

12. Nutzfahrzeug nach wenigstens einem der Ansprüche 1 bis 11,
**dadurch gekennzeichnet, dass**
die Rollen (13) in Rollenpaketen (19) mit jeweils wenigstens zwei Rollen (13) angeordnet sind

13. Nutzfahrzeug nach wenigstens einem der Ansprüche 1 bis 12,
**dadurch gekennzeichnet, dass**
die Rollen (13) des Laderahmens (12) seitlich an Außenflächen der Längsträger (12b) des Laderahmens (12) befestigt sind.

## Claims

1. A commercial vehicle for transporting containers, having a length-adjustable frame structure (10), which has a chassis frame (11) and a loading frame (12), each having two longitudinal beams (11b, 12b) connected by means of crossmembers (11a, 12a),
**characterised in that**
the chassis frame (11) and/or the loading frame (12) have rollers (13) such that the chassis frame (11) and the loading frame (12) can be displaced relative to each other along the longitudinal beams (11b, 12b), wherein the rollers (13) of the chassis frame (11) are fastened to at least one crossmember (11a) between the longitudinal beams (11b) of the chassis frame.

2. The commercial vehicle according to Claim 1,
**characterised in that**
the rollers (13) of the chassis frame (11) are arranged in a cut-out (14) in the crossmember (11a), wherein a section (13a) of the rollers (13) projects over the upper edge (14a) of the cut-out (14).

3. The commercial vehicle according to Claim 1 or 2,
**characterised in that**
the chassis frame (11) is connected to an axle assembly (15), which has a first wheel axle (15a) in the direction of travel, wherein the rollers (13) of the chassis frame (11) are arranged in front of and behind the first wheel axle (15a) in the direction of travel.

4. The commercial vehicle according to Claim 3,
**characterised in that**
at least two crossmembers (11a) of the chassis frame (11) each have rollers (13), wherein the rear crossmember (11a) in the direction of travel is arranged between the first wheel axle (15a) and a second wheel axle (15b) of the axle assembly (15).

5. The commercial vehicle according to at least one of Claims 1 to 4,
**characterised in that**
the lateral distance transverse to the direction of travel between the rollers (13) of a crossmember (11a) corresponds to the distance between the longitudinal beams (12b) of the loading frame (12).

6. The commercial vehicle according to at least one of Claims 1 to 5,
**characterised in that**
the chassis frame (11) has roller arrangements (16) for laterally guiding the loading frame (12).

7. The commercial vehicle according to Claim 6,
**characterised in that**
the roller arrangement (16) for laterally guiding the loading frame (12) comprises rollers (13), which are connected to the longitudinal beams (11b) of the chassis frame (11) and are laterally in contact with outer faces of the longitudinal beams (12b) of the loading frame (12).

8. The commercial vehicle according to Claim 6 or 7,
**characterised in that**
the roller arrangement (16) engages laterally into the longitudinal beams (12b) of the loading frame (12) and secures the loading frame (12) in the vertical direction.

9. The commercial vehicle according to Claim 8,
**characterised in that**
the roller arrangement (16) has horizontal sliding surfaces (17), which are arranged parallel to the longitudinal beams (12b) of the loading frame (12) and each form a stop (18) for the longitudinal beams (12b) of the loading frame (12).

10. The commercial vehicle according to at least one of Claims 1 to 9,
**characterised in that**
the rollers (13) of the loading frame (12) are arranged on the rear end of the longitudinal beams (12b) of the loading frame (12).

11. The commercial vehicle according to at least one of Claims 1 to 10,
**characterised in that**
the contact region of the rollers (13) of the loading frame (12) and of the rollers (13) of the chassis frame (11) is arranged in the same displacement plane.

12. The commercial vehicle according to at least one of Claims 1 to 11,
**characterised in that**
the rollers (13) are arranged in roller sets (19), each having at least two rollers (13).

13. The commercial vehicle according to at least one of Claims 1 to 12,
**characterised in that**
the rollers (13) of the loading frame (12) are fastened laterally to outer faces of the longitudinal beams (12b) of the loading frame (12).

## Revendications

1. Véhicule utilitaire pour le transport de conteneurs avec une construction de châssis (10) réglable en longueur qui comporte un cadre de châssis (11) et un cadre de chargement (12) respectivement avec deux longerons (11b, 12b) reliés par des traverses (11a, 12a) **caractérisé en ce que**
le cadre de châssis (11) et/ou le cadre de chargement (12) comporte des rouleaux (13) de telle sorte que le cadre de châssis (11) et le cadre de chargement (12) peuvent coulisser l'un par rapport à l'autre le long des longerons (11b, 12b), les rouleaux (13) du cadre de châssis (11) étant fixés sur au moins une traverse (11a) entre les longerons (11b) du cadre de châssis.

2. Véhicule utilitaire selon la revendication 1 **caractérisé en ce que** les rouleaux (13) du cadre de châssis (11) sont disposés dans un évidement (14) dans la traverse (11a), une partie (13a) des rouleaux (13) faisant saillie au-dessus du bord supérieur (14a) de l'évidement (14).

3. Véhicule utilitaire selon la revendication 1 ou 2 **caractérisé en ce que** le cadre de châssis (11) est relié à un train roulant (15) qui comporte un premier essieu (15a), les rouleaux (13) du cadre de châssis (11) étant disposés dans le sens de la marche d'une part devant et d'autre part derrière le premier essieu (15a).

4. Véhicule utilitaire selon la revendication 3 **caractérisé en ce qu'** au moins deux traverses (11a) du cadre de châssis (11) comportent respectivement des rouleaux (13), la traverse arrière (11a) dans le sens de la marche étant disposée entre le premier essieu (15a) et un deuxième essieu (15b) du train roulant (15).

5. Véhicule utilitaire selon au moins l'une quelconque des revendications 1 à 4 **caractérisé en ce que** la distance latérale en travers par rapport au sens de la marche entre les rouleaux (13) d'une traverse (11a) correspond à la distance des longerons (12b) du cadre de châssis (12).

6. Véhicule utilitaire selon au moins l'une quelconque des revendications 1 à 5 **caractérisé en ce que** le cadre de châssis (11) comporte des agencements de rouleaux (16) pour le guidage latéral du cadre de chargement (12).

7. Véhicule utilitaire selon la revendication 6 **caractérisé en ce que** l'agencement de rouleux (16) pour le guidage latéral du cadre de châssis (12) comprend des rouleaux (13) qui sont reliés aux longerons (11b) du cadre de châssis (11) et sont adjacents latéralement aux surfaces extérieures des longerons (12b) du cadre de chargement (12).

8. Véhicule utilitaire selon la revendication 6 ou 7 **caractérisé en ce que** l'agencement de rouleaux (16) vient en prise latéralement dans les longerons (12b) du cadre de chargement (12) et bloque le cadre de chargement (12) dans le sens vertical.

9. Véhicule utilitaire selon la revendication 8 **caractérisé en ce que** l'agencement de rouleaux (16) comporte des surfaces de glissement horizontales (17) qui sont disposées parallèlement aux longerons (12b) du cadre de chargement (12) et forment respectivement une butée (18) pour les longerons (12b) du cadre de chargement (12).

10. Véhicule utilitaire selon au moins l'une quelconque des revendications 1 à 9 **caractérisé en ce que** les rouleaux (13) du cadre de chargement (12) sont disposés à l'extrémité arrière des longerons (12b) du cadre de chargement (12).

11. Véhicule utilitaire selon au moins l'une quelconque des revendications 1 à 10 **caractérisé en ce que** la zone de support des rouleaux (13) du cadre de chargement (12) et des rouleaux (13) du cadre de châssis (11) est disposée dans le même plan de glissement.

12. Véhicule utilitaire selon au moins l'une quelconque des revendications 1 à 11 **caractérisé en ce que** les rouleaux (13) sont disposés dans des ensembles de rouleaux (19) avec respectivement au moins deux rouleaux (13).

13. Véhicule utilitaire selon au moins l'une quelconque des revendications 1 à 12 **caractérisé en ce que** les rouleaux (13) du cadre de chargement (12) sont fixés latéralement sur les surfaces extérieures des longerons (12b) du cadre de chargement (12).
